# EUROPÄISCHE PATENTANMELDUNG

(11) **EP 3 492 764 A1**
(43) Veröffentlichungstag der Anmeldung: **05.06.2019**
(21) Anmeldenummer: 18203976.8
(22) Anmeldetag: 01.11.2018
(51) Int. Cl.: F16D 13/52, F16D 13/70

(54) **SCHIFFSGETRIEBE**

(30) Priorität: 10.11.2017 DE 102017126444
(71) Anmelder: Reintjes GmbH, 31785 Hameln (DE)
(72) Erfinder: Hoffmann, Felix, 31787 Hameln (DE)
(74) Vertreter: Gramm, Lins & Partner Patent- und Rechtsanwälte PartGmbB

(57) **Zusammenfassung**

Die Erfindung betrifft ein Schiffsgetriebe (10) mit einer Antriebswelle (12), einer Abtriebswelle (14), einem Lamellenpaket (30), das Antriebs-Lamellen (32), die drehstarr relativ zur Antriebswelle (12) sind, und Abtriebs-Lamellen (34), die drehstarr relativ zur Abtriebswelle (14) sind, aufweist und durch Bewegen der Antriebs-Lamellen (32) relativ zu den Abtriebs-Lamellen (34) in einer Kuppelrichtung (K) einkuppelbar ist, und einer Notkuppelvorrichtung (38) zum Einkuppeln des Lamellenpakets (30) unabhängig von der Kuppelvorrichtung (36). Erfindungsgemäß ist vorgesehen, dass die Notkuppelvorrichtung (38) zumindest ein Betätigungselement (40) zum Bewegen in einer zur Kuppelrichtung (K) quer verlaufenden Querrichtung (Q) und einen Umsetzer (42) zum Umsetzen der Bewegung in Querrichtung (Q) in eine Bewegung in Kuppelrichtung (K) aufweist, sodass durch Bewegen des Betätigungselements (40) in Querrichtung (Q) das Lamellenpaket (30) einkuppelbar ist.

## Beschreibung

Die Erfindung betrifft ein Schiffsgetriebe mit (a) einer Antriebswelle, (b) einer Abtriebswelle, (c) einem Lamellenpaket, das Antriebs-Lamellen, die drehstarr relativ zur Antriebswelle sind, und Abtriebs-Lamellen, die drehstarr relativ zur Abtriebswelle sind, aufweist, und durch Bewegen der Antriebs-Lamellen relativ zu den Abtriebs-Lamellen in einer Kuppelrichtung einkuppelbar ist, (d) einer Kuppelvorrichtung zum automatischen Einkuppeln des Lamellenpakets und (e) einer Notkuppelvorrichtung zum Einkuppeln des Lamellenpakets unabhängig von der Kuppelvorrichtung.

Ein derartiges Schiffsgetriebe ist aus der DE 197 27 801 C2 bekannt. Schiffsgetriebe sind Getriebe, die in Schiffen eingesetzt werden, um die in der Regel zu hohe Drehzahl des Hauptantriebs auf eine niedrigere Drehzahl umzusetzen, die für den oder die Propeller optimal ist. An Schiffsgetriebe werden vielfältige Anforderungen gestellt. So sollten sie eine möglichst geringe Baulänge aufweisen, um möglichst viel Platz für die Nutzlast zu lassen. Gleichzeitig müssen jedoch das sichere Funktionieren und eine hohe Lebenddauer gewährleistet sein. Die drei Forderungen stehen jedoch in einem Konkurrenzverhältnis zueinander. So wäre es möglich, die Zahnräder des Schiffsgetriebes schmaler auszubilden. Daraus würde aber eine höhere Flächenpressung auf die Zähne des Zahnrads resultieren, was die Lebensdauer und die Ausfallwahrscheinlichkeit negativ beeinflusst.

Bei dem Schiffsgetriebe ist aus der DE 197 27 801 C2 sind mechanische Mittel, beispielsweise in Form von Gewindebolzen vorgesehen, welche parallel zur Drehachse in den einen Kupplungsteil einschraubbar sind, um mit ihnen die Kolben zusammen mit Reibscheiben gegen die Druckscheibe zu pressen und damit die Kupplung zu schließen. Der Formschluss kann hohe Kräfte übertragen.

Aus der DE 814 849 ist ein Schiffswendegetriebe bekannt, bei dem für Vorwärts- und Rückwärtsgang die Kupplungen und Bremsen ölhydraulisch gesteuert werden und außer der durch Öldruck zu betätigenden Kupplung ein von Hand aus zu verschiebender und im ein- und ausgerückten Zustand durch eine Raste gehaltener Bolzen vorgesehen ist, durch den die antreibende mit der abtreibenden Welle unmittelbar starr gekuppelt werden kann.

In der DE 1126 212 ist ein Planetenräder-Wendegetriebe für Schiffsantriebe beschreiben, bei dem eine Bremse vorhanden ist, die auf das Kupplungsgehäuse der Kupplung und damit auf die Ausgangswelle wirkt. Diese Bremse hat den Zweck, die Abtriebswelle des Getriebes im Leerlauf und bei laufendem Motor vollkommen stillsetzen zu können, was gegebenenfalls beim Netzeinholen wichtig sein kann.

Der Erfindung liegt die Aufgabe zugrunde, ein verbessertes Schiffsgetriebe vorzuschlagen.

Die Erfindung löst das Problem durch ein gattungsgemäßes Schiffsgetriebe, bei dem die Notkuppelvorrichtung zumindest ein Betätigungselement zum Betätigen einer zur Kuppelrichtung quer verlaufenden Querrichtung und ein Umsetzer zum Umsetzen der Bewegung in Querrichtung in eine Bewegung in Kuppelrichtung aufweist, sodass durch Bewegen des Betätigungselements in Querrichtung das Lamellenpaket einkuppelbar ist.

Vorteilhaft an einem derartigen Schiffsgetriebe ist, dass es mit einer geringeren Baulänge hergestellt werden kann, wenngleich dies nicht notwendig ist. Es ist auch möglich, dass ein erfindungsgemäßes Schiffsgetriebe eine Baulänge hat, die der Baulänge eines herkömmlichen Schiffsgetriebes entspricht. In diesem Fall ist es aber möglich, die Zahnräder breiter auszubilden und so die Lebensdauer und/oder die Verfügbarkeit positiv zu beeinflussen. Auch dies ist jedoch nicht notwendig. Es ist ein weiterer Vorteil des erfindungsgemäßen Schiffsgetriebes, dass die Notkuppelvorrichtung einfach zu bedienen ist. Bei bekannten Schiffsgetrieben wird die Notkuppelvorrichtung dadurch betätigt, dass das Betätigungselement in Kuppelrichtung bewegt wird. Das setzt voraus, dass das Betätigungselement mit einem entsprechenden Werkzeug gedreht wird. Das Eingreifen mit dem Werkzeug ist jedoch schwierig, da das Schiffsgetriebe, wie oben ausgeführt, mit einer möglichst geringen Baulänge ausgeführt wird. Die einfachere Bedienbarkeit ist gerade deshalb von Vorteil, weil der Ausfall des Schiffsgetriebes Teil einer größeren Havarie des entsprechenden Schiffes sein kann. In anderen Worten muss die Notkuppelvorrichtung häufig in Situationen betätigt werden, in denen die Bedienung durch weitere äußere Umstände behindert ist, beispielsweise durch den Ausfall weiterer Systeme. Durch die einfache Bedienbarkeit der Notkuppelvorrichtung ist diese zudem schneller zu bedienen, sodass im Falle einer Havarie das Schiff schneller zur Reparatur gefahren werden kann. Das vermindert die Kosten des Ausfalls.

Im Rahmen der vorliegenden Beschreibung wird unter einem Schiffsgetriebe insbesondere ein Untersetzungsgetriebe verstanden, das heißt, dass die Abtriebswelle langsamer dreht als die Antriebswelle.

Vorzugsweise ist das Schiffsgetriebe zudem so ausgebildet, dass es ein Notstoppmanöver ausführen kann. Unter einem Notstoppmanöver wird verstanden, dass das Getriebe bei voller Fahrt vorwärts, also bei Nenn-Antriebslast in Vorwärtsfahrtrichtung, auf volle Fahrt rückwärts geschaltet werden kann. Ein derartiges Manöver bedeutet eine extreme Belastung für das Schiffsgetriebe, insbesondere für die Lamellen. Getriebe, die keine Schiffsgetriebe sind, werden für eine derartige Belastung nicht ausgelegt, da beispielsweise Landfahrzeuge Bremsen besitzen, mit denen das Fahrzeug abgebremst werden kann. Bei Schiffen ist dies nicht der Fall, diese müssen im Notfall durch das Schalten auf Rückwärtsfahrt gebremst werden.

Unter der Antriebswelle wird insbesondere diejenige Welle verstanden, die in Einbaulage eines Schiffsgetriebes mit dem Hauptantrieb, in dem in der Regel ein Schiffsdiesel, drehstarr verbunden ist.

Unter der Abtriebswelle wird insbesondere diejenige Welle des Schiffsantriebs verstanden, die in Einbaulage des Schiffsgetriebes mit dem Propeller drehstarr verbunden ist.

Unter der Kuppelvorrichtung wird insbesondere eine Vorrichtung verstanden, die zum automatischen Kuppeln ausgebildet ist. Vorzugsweise ist die Kuppelvorrichtung eine hydraulische Kuppelvorrichtung, sodass der Druck zum einen Ein- und/oder Auskoppeln der Antriebs-Lamellen und der Abtriebs-Lamellen von einem Drucköl aufgebracht wird.

Unter dem Merkmal, dass die Antriebs-Lamellen relativ zu den Abtriebs-Lamellen durch Bewegung in einer Kuppelrichtung einkuppelbar sind, wird insbesondere verstanden, dass die Antriebs-Lamellen und/oder die Abtriebs-Lamellen zum Kuppeln aufeinander zu bewegt werden, sodass sich eine relative Bewegung zwischen beiden einstellt. In der Regel ist diese Relativbewegung zueinander eine Linearbewegung, die beispielsweise von einem Hydraulikzylinder bewirkt wird. In diesem Fall entspricht die Kuppelrichtung der Bewegungsrichtung der jeweiligen Lamellen beim Einkuppeln.

Unter der Notkuppelvorrichtung wird insbesondere eine Vorrichtung verstanden, mittels der die Antriebs-Lamellen und die Abtriebs-Lamellen miteinander verkuppelt werden können, ohne dass dazu die Kuppelvorrichtung notwendig ist. Insbesondere ist die Notkuppelvorrichtung zur Handbetätigung ausgebildet. Unter einer Handbetätigung wird insbesondere verstanden, dass es möglich ist, die Notkuppelvorrichtung mittels eines händisch betriebenen Handwerkzeugs zu betätigen. Mittels der Notkuppelvorrichtung ist es damit insbesondere möglich, den Antrieb des Schiffs, insbesondere den Schiffsdiesel, drehstarr mit dem Schiffspropeller zu verbinden, auch wenn die Kuppelvorrichtung defekt ist. Die Notkuppelvorrichtung stellt damit sicher, dass das Schiff, in dem das Schiffsgetriebe verbaut ist, auch dann fahren kann, wenn die Kuppelvorrichtung ausgefallen ist.

Unter dem Betätigungselement wird insbesondere ein Bauteil verstanden, das per Hand oder mittels eines handbetätigten Werkzeugs, beispielsweise eines Schlüssels, bewegbar ist. Darunter, dass das Betätigungselement in einer Querrichtung bewegbar ist, wird insbesondere verstanden, dass es in diese Querrichtung auch vorwärts bewegbar ist. Es ist dabei möglich, in der Regel aber nicht notwendig, dass dies die einzige Bewegungsmöglichkeit ist. Beispielsweise kann es sich bei dem Betätigungselement um einen Gewindestift handeln, der durch Drehen um seine Längsachse in Querrichtung bewegbar ist. Die Querrichtung bezieht sich damit insbesondere auf den Linearanteil, der auch als Translationsanteil bezeichnet werden könnte, der Gesamt-Bewegung des Betätigungselements.

Gemäß einer bevorzugten Ausführungsform hat das Betätigungselement an seiner Vorderseite eine Betätigungsstruktur, die schräg zur Querrichtung verläuft. Der Umsetzer besitzt an seiner Rückseite eine Gegenstruktur zum Zusammenwirken mit der Betätigungsstruktur. Insbesondere sind die Betätigungsstruktur und die Gegenstruktur so ausgebildet, dass das Betätigungselement mit seiner Betätigungsstruktur gegen die Gegenstruktur drückt, wenn das Betätigungselement in Querrichtung bewegt wird, sodass sich die Gegenstruktur in Kuppelrichtung bewegt.

Gemäß einer bevorzugten Ausführungsform hat das Betätigungselement eine ebene oder konvexe Vorderseite. Die Vorderseite ist dabei diejenige Seite, die bei der Bewegung in die Querrichtung vorne ist. In anderen Worten ist die Vorderseite dann vorne, wenn die Notkuppelvorrichtung betätigt wird. Wird die Notkuppelvorrichtung betätigt, wird das Lamellenpaket eingekuppelt.

Vorzugsweise hat der Umsetzer eine ebene oder konvexe Rückseite, die mit der Vorderseite des Betätigungselements zusammenwirkt. Auf diese Weise bewirkt eine Bewegung des Betätigungselements in Querrichtung eine Bewegung des Betätigungselements in Kuppelrichtung.

Besonders bevorzugt ist das Betätigungselement ein Gewindestift. Dieser Gewindestift ist vorzugsweise mit einem Werkzeug, insbesondere einem Schraubenschlüssel, betätigbar. Günstig ist es zudem, wenn der Umsetzer eine Kugel ist. Es ergibt sich so ein besonders einfach aufgebautes Schiffsgetriebe.

Vorzugsweise besitzt das Schiffsgetriebe zumindest drei Betätigungselemente und zumindest drei Umsetzer, wobei vorzugsweise jedes Betätigungselement mit genau einem Umsetzer zusammenwirkt. Die Betätigungselemente und die Umsetzer sind vorzugsweise um eine Längsachse der Welle, relativ zu der die Abtriebs-Lamellen drehstarr befestigt sind, angeordnet.

Das Lamellenpaket ist vorzugsweise an einem Einkuppelzustand, in dem die Antriebs-Lamellen ein Drehmoment auf die Abtriebs-Lamellen übertragen, und in einem Auskuppelzustand, in dem die Antriebs-Lamellen von den Abtriebs-Lamellen einen Kuppelweg beabstandet sind, bringbar. In seiner bevorzugten Ausführungsform ist ein Radius einer gedachten Ausgleichskappe durch die Vorderseite des Betätigungselements größer als der Kuppelweg.

Besonders günstig ist es, wenn der Radius höchstens das 10-fache, vorzugsweise höchstens das Doppelte beträgt. Auf diese Weise ist das Drehmoment, das an jedes der Betätigungselemente aufgebracht werden muss, um das Lamellenpaket einzukuppeln, hinreichend klein.

Vorzugsweise bildet die Querrichtung ein Umsetzwinkel mit der Kuppelrichtung, der um höchstens 20°, insbesondere höchstens 10°, vom rechten Winkel abweicht. Auf diese Weise kann ein besonders kurzbauendes Schiffsgetriebe gebaut werden.

Das Schiffsgetriebe besitzt gemäß einer bevorzugten Ausführungsform ein Gehäuse, das die Antriebswelle, die Abtriebswelle und das Lamellenpaket umgibt und das eine reversibel verschließbare Revisionsöffnung hat. Vorzugsweise sind die Betätigungselemente so angeordnet, dass die Notkuppelvorrichtung so orientierbar ist, dass eine Längsachse zumindest eines der Betätigungselemente in Richtung der Öffnung, vorzugsweise durch die Öffnung, verläuft. Es ist dann einfach möglich, ein Werkzeug, insbesondere einen Schlüssel, zu führen und damit die Notkuppelvorrichtung zu betätigen.

Erfindungsgemäß ist zudem ein Schiff mit einem Hauptantrieb, insbesondere ein Schiffsdiesel, einem Propeller und einem erfindungsgemäßen Getriebe, das drehstarr mit dem Hauptantrieb und dem Propeller verbindbar angeordnet ist.

Im Folgenden wird die Erfindung anhand der beigefügten Zeichnungen näher erläutert. Dabei zeigt
- Figur 1: eine dreidimensionale Ansicht eines erfindungsgemäßen Schiffsgetriebes,
- Figur 2: die Wellen des Schiffsgetriebes gemäß Figur 1 in einer Detailansicht,

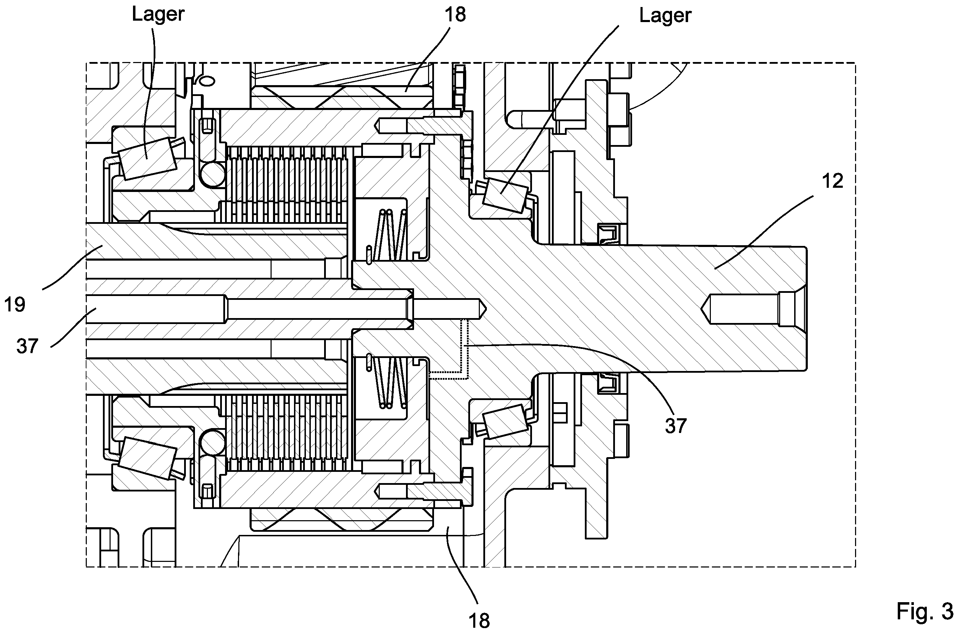

- Figur 3: eine Ausschnitts-Schnittansicht durch das Schiffsgetriebe gemäß der Figur 1 und 2,
- Figur 4: eine detailliertere Ansicht eines Lamellenpakets der Schiffsgetriebe gemäß der Figuren 1 bis 3, wobei das Lamellenpaket und die Notkuppelvorrichtung im Auskoppelzustand gezeigt sind und
- Figur 5: die Ansicht gemäß Figur 4, bei dem das Lamellenpaket und die Notkuppelvorrichtung im Einkuppelzustand gezeigt sind.
- Figur 6: zeigt eine detailliertere Ansicht eines Lamellenpakets eines erfindungsgemäßen Schiffsgetriebes gemäß einer zweiten Ausführungsform und
- Figur 7: zeigt schematisch ein erfindungsgemäßes Schiff.

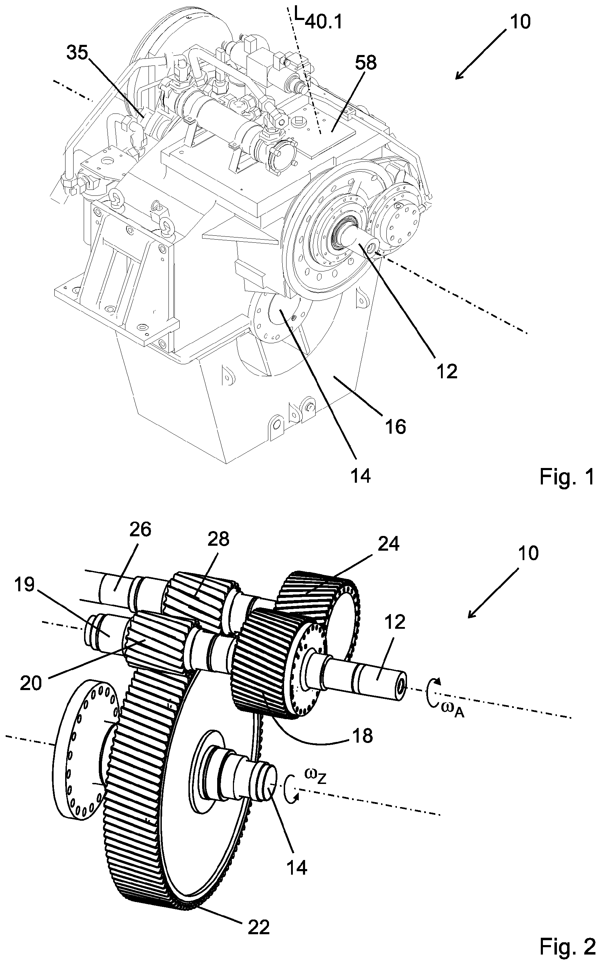

Figur 1 zeigt ein erfindungsgemäßes Schiffsgetriebe 10 mit einer Antriebswelle 12, einer Abtriebswelle 14 (vergleiche Fig. 2) und einem Gehäuse 16, das die Antriebswelle 12 und die Abtriebswelle 14 umgibt.

Figur 2 zeigt, dass auf der Antriebswelle 12 ein Antriebswellenzahnrad 18 angeordnet ist. Koaxial zur Antriebswelle 12 verläuft eine erste Ritzelwelle 19, auf der ein erstes Ritzel 20 angeordnet ist. Das erste Ritzel 20 kämmt mit einem Stirnrad 22, das auf der Abtriebswelle 14 sitzt.

Das Antriebswellenzahnrad 18 kämmt zudem mit einem Ritzelwellenzahnrad 24, das auf einer zweiten Ritzelwelle 26 ausgebildet ist. Die zweite Ritzelwelle 26 trägt zudem ein zweites Ritzel 28, das ebenfalls mit dem Stirnrad 22 kämmt.

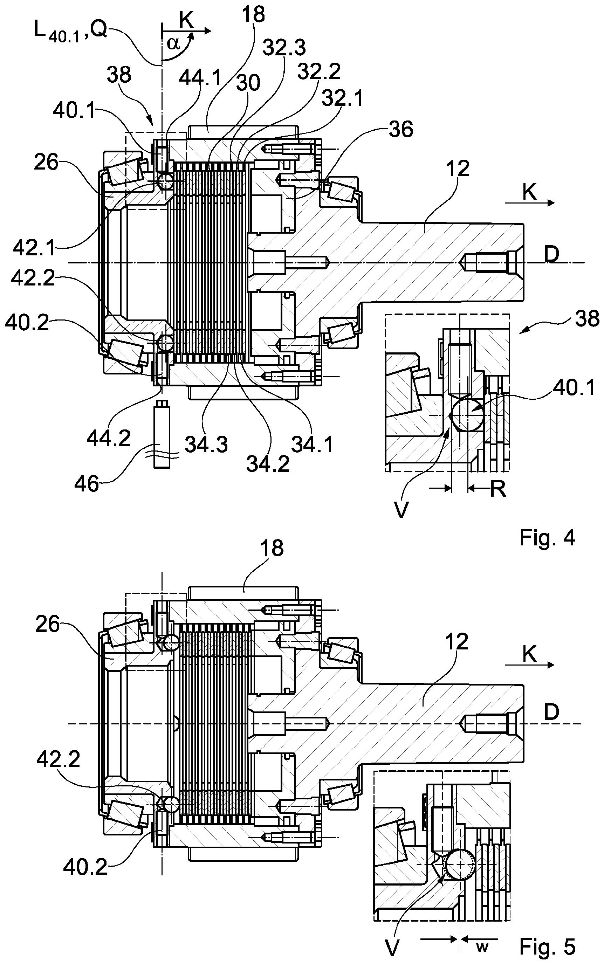

Figur 4 zeigt einen vergrößerten Teil-Querschnitt durch die Antriebswelle 12. Es ist zu erkennen, dass innerhalb des Antriebswellenzahnrades 18 ein Lamellenpaket 30 angeordnet ist. Das Lamellenpaket umfasst Antriebs-Lamellen 32.1, 32.2, ..., die drehfest mit der Antriebswelle 12 verbunden sind. Dreht sich in anderen Worten die Antriebswelle 12, drehen sich stets auch die Antriebs-Lamellen 32.

Das Lamellenpaket 30 umfasst zudem Abtriebs-Lamellen 34.1, 34.2, ..., die drehfest mit der Ritzelwelle 26 verbunden sind. Werden die Antriebs-Lamellen 32.i und die Abtriebs-Lamellen 34.i (i = 1, 2, ...) gegeneinander gepresst, so wird ein Drehmoment von der Antriebswelle 12 auf die Ritzelwelle 26 übertragen. Sind die Antriebs-Lamellen und die Abtriebs-Lamellen jeweils voneinander beabstandet, wie dies in Figur 4 gezeigt ist, sind die Antriebswelle 12 und die Ritzelwelle 26 voneinander entkoppelt, das heißt, dass sie in entgegengesetzte Richtungen gedreht werden können.

Das Schiffsgetriebe 10 besitzt eine Kuppelvorrichtung 36 in Form eines Kolbens, der mittels einer Druckölleitung 37 mit Drucköl beaufschlagbar ist. Wird die Kuppelvorrichtung 36 mit Drucköl beaufschlagt, so bewegt sie sich in Figur 4 nach links und presst damit die Antriebs-Lamellen 32.i und die Abtriebs-Lamellen 34.i zusammen. Dadurch wird das Lamellenpaket geschlossen und die Ritzelwelle 26 mit der Antriebswelle 12 verkuppelt. Die Druckölleitung 37 wird über einen Druckölanschluss 35 (siehe Figur 1) mit Drucköl beaufschlagt. Eingezeichnet ist zudem ein zweiter Druckölanschluss 35' zum Betätigen des Ritzelwellenzahnrads 24.

Figur 4 zeigt zudem, dass das Schiffsgetriebe eine Notkuppelvorrichtung 38 besitzt, die ein Betätigungselement 4.1 und ein zweites Betätigungselement 40.2 aufweist. Jedes Betätigungselement 40.j (j = 1, 2, ..., N) hat eine Längsachse L_{40.j}. Jede Längsachse L_{40.j} bildet einen Umsetzwinkel α mit einer Kuppelrichtung K, die im vorliegenden Fall parallel zu einer Drehachse D der Antriebswelle 12 verläuft. Die Kuppelrichtung K ist diejenige Richtung, in die die Abtriebs-Lamellen 34.1 relativ zu den Antriebs-Lamellen 32.i verschoben werden müssen, um das Lamellenpaket 30 einzukuppeln. Im vorliegenden Fall entspricht die Kuppelrichtung K der Bewegungsrichtung der Kuppelvorrichtung 36, die durch den Kolben gebildet ist.

Jedes Betätigungselement 40.j wirkt auf einen Umsetzer 42.j, der im vorliegenden Fall durch eine Kugel gebildet ist. Wird das Betätigungselement 40.j in Richtung seiner Längsachse L_{40.j} bewegt, so drückt es auf den jeweiligen Umsetzer 42.j, der sich dadurch entlang der Kuppelrichtung K bewegt und die Antriebs-Lamellen 42.i relativ zu den Abtriebs-Lamellen 34.i so bewegt, dass das Lamellenpaket 30 einkuppelt.

Beispielsweise besitzen die Betätigungselemente 40.j eine Kuppelstruktur 44.j, also im eingezeichneten Bild 44.1 und 44.2, die beispielsweise durch eine Innen-Mehrkantstruktur gebildet sein kann. Durch Eingreifen mit einem schematisch eingezeichneten Werkzeug 46, das eine zur Kuppelstruktur 44 komplementäre Struktur hat, kann das jeweilige Betätigungselement 40.j gedreht und so entlang seiner Längsachse L_{40.j} auf den Umsetzer 42.j zugestellt werden. Die genaue Ausgestaltung der Notkuppelvorrichtung 38 ist in dem kleinen Bild unten rechts noch einmal vergrößert dargestellt.

Das Ritzelwellenzahnrad 24 ist über ein weiteres Lamellenpaket mit der zweiten Ritzelwelle 26 verbunden. Eine Steuereinheit des Schiffsgetriebes ist so ausgebildet, dass stets nur ein Lamellenpaket gekuppelt ist.

Figur 5 zeigt die Situation, in der die Betätigungselemente 40.j, im vorliegenden Fall die eingezeichneten Betätigungselemente 40.1, eine konvexe Vorderseite V. Die Vorderseite V besitzt einen Krümmungsradius R, der der Radius einer Ausgleichs-Halbkugel durch die Vorderseite V ist. Der Krümmungsradius R sei größer als ein Koppelweg w, der im Teilbild unten rechts in Figur 5 eingezeichnet ist.

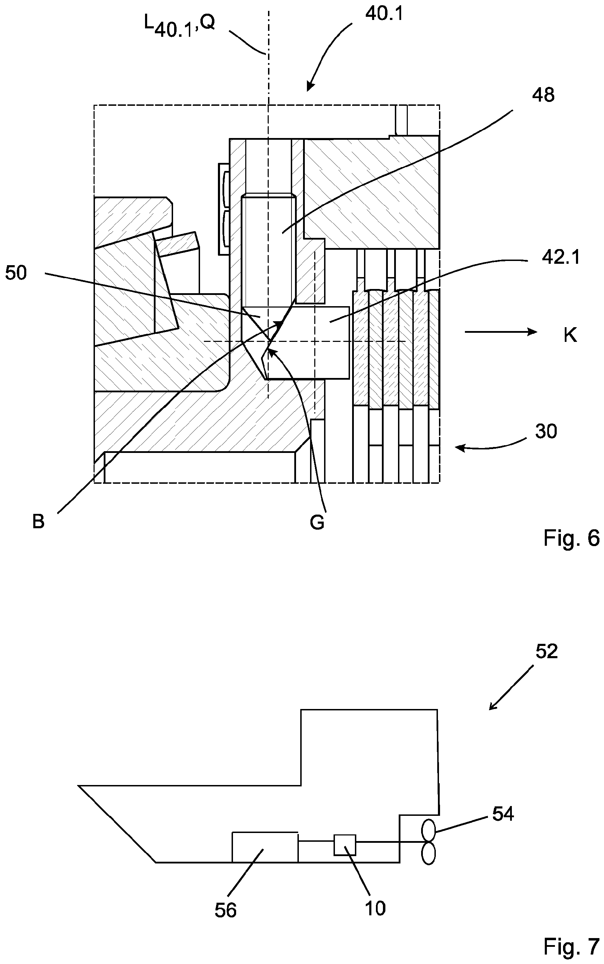

Figur 6 zeigt eine alternative Ausführungsform, bei der das Betätigungselement 40 neben einem Gewindestift 48 ein Kopfteil 50 aufweist, das eine Betätigungsstruktur B besitzt, die durch eine schräg zur Querrichtung Q verlaufende Fläche gebildet ist. In Ausführungsform gemäß Figur 4 und 5 ist die Betätigungsstruktur konvex, insbesondere abschnittsweise kugelkappenförmig. In der in Figur 6 gezeigten Ausführungsform hingegen ist die Betätigungsstruktur B flach. Der Umsetzer 42.1 besitzt eine Gegenstruktur G, die zum Zusammenwirken mit der Betätigungsstruktur B ausgebildet ist. Entsprechend verläuft auch die Gegenstruktur quer zur Querrichtung Q. Wird der Gewindestift 48 gedreht, so bewegt er sich entlang einer Längsachse L_{40.1} in Querrichtung Q auf die Drehachse D zu. Das Kopfteil 50 ist drehbar relativ zum Gewindestift ausgebildet und dreht sich nicht. Das Kopfteil 50 drückt auf die Umsetzer 42.1 und bewegt diesen in Kuppelrichtung K, sodass das Lamellenpaket 30 zusammengepresst und so gekuppelt wird.

Figur 7 zeigt schematisch ein erfindungsgemäßes Schiff 52 mit einem Propeller 54, einem Hauptantrieb 56 in Form eines Schiffsdiesels und einem erfindungsgemäßen Schiffsgetriebe 10.

Figur 1 zeigt, dass das Gehäuse 16 eine Revisionsöffnung 56 hat, die mit einem reversibel offen- und verschließbaren Deckel verschlossen ist. Die Längsachse L_{40.1} des Betätigungselements 40.1 verläuft durch die Revisionsöffnung 56. Um das Betätigungselement mit dem Werkzeug 46 zu betätigen, muss nur die Revisionsöffnung 56 geöffnet und gegebenenfalls die Antriebswelle 12 so gedreht werden, dass die Längsachse L_{40.1} durch die Revisionsöffnung 56 verläuft. Das Werkzeug 46 kann dann entlang der Längsachse L_{40.1} auf das Betätigungselement 40.1 zu bewegt und mit diesem gekoppelt werden.

**Bezugszeichenliste**

| | | | |
|---|---|---|---|
| 10 | Schiffsgetriebe | α | Umsetzwinkel |
| 12 | Antriebswelle | B | Betätigungsstruktur |
| 14 | Abtriebswelle | D | Drehachse |
| 16 | Gehäuse | G | Gegenstruktur |
| 18 | Antriebswellenzahnrad | K | Kuppelrichtung |
| 19 | erste Ritzelwelle | | |
| | | L_{40.j} | Längsachse |
| 20 | erstes Ritzel | N | Anzahl der Betätigungselemente |
| 22 | Stirnrad | Q | Querrichtung |
| 24 | Ritzelwellenzahnrad | R | Krümmungsradius |
| 26 | zweite Ritzelwelle | V | Vorderseite |
| 28 | zweites Ritzel | | |
| | | w | Koppelweg |
| 30 | Lamellenpaket | | |
| 32 | Antriebs-Lamelle | | |
| 34 | Abtriebs-Lamelle | | |
| 36 | Kuppelvorrichtung | | |
| 37 | Druckölleitung | | |
| 38 | Notkuppelvorrichtung | | |
| | | | |
| 40 | Betätigungselement | | |
| 42 | Umsetzer | | |
| 44 | Kuppelstruktur | | |
| 46 | Werkzeug | | |
| 48 | Gewindestift | | |
| | | | |
| 50 | Kopfteil | | |
| 52 | Schiff | | |
| 54 | Propeller | | |
| 56 | Hauptantrieb | | |
| 58 | Revisionsöffnung | | |

## Patentansprüche

1. Schiffsgetriebe (10) mit
(a) einer Antriebswelle (12),
(b) einer Abtriebswelle (14),
(c) einem Lamellenpaket (30), das
- Antriebs-Lamellen (32), die drehstarr relativ zur Antriebswelle (12) sind, und
- Abtriebs-Lamellen (34), die drehstarr relativ zur Abtriebswelle (14) sind, aufweist und
- durch Bewegen der Antriebs-Lamellen (32) relativ zu den Abtriebs-Lamellen (34) in einer Kuppelrichtung (K) einkuppelbar ist, und
(d) einer Notkuppelvorrichtung (38) zum Einkuppeln des Lamellenpakets (30) unabhängig von der Kuppelvorrichtung (36),
**dadurch gekennzeichnet, dass**
(e) die Notkuppelvorrichtung (38)
- zumindest ein Betätigungselement (40) zum Bewegen in einer zur Kuppelrichtung (K) quer verlaufenden Querrichtung (Q) und
- einen Umsetzer (42) zum Umsetzen der Bewegung in Querrichtung (Q) in eine Bewegung in Kuppelrichtung (K) aufweist,
sodass durch Bewegen des Betätigungselements (40) in Querrichtung (Q) das Lamellenpaket (30) einkuppelbar ist.

2. Schiffsgetriebe (10) nach Anspruch 1, **gekennzeichnet durch** eine Kuppelvorrichtung (36) zum automatischen Einkuppeln des Lamellenpakets (30).

3. Schiffsgetriebe (10) nach einem der vorstehenden Ansprüche, **dadurch gekennzeichnet, dass**
- das Betätigungselement (40) an seiner Vorderseite (V) eine Betätigungsstruktur (B) hat, die schräg zur Querrichtung (Q) verläuft und
- der Umsetzer (42) an seiner Rückseite eine Gegenstruktur (G) zum Zusammenwirken mit der Betätigungsstruktur (B) aufweist,
wobei die Gegenstruktur (G) quer zur Kuppelrichtung (K) verläuft.

4. Schiffsgetriebe (10) nach einem der vorstehenden Ansprüche, **dadurch gekennzeichnet, dass** das Betätigungselement (40) die eine konvexe Vorderseite (V) hat.

5. Schiffsgetriebe (10) nach Anspruch 4, **dadurch gekennzeichnet, dass** der Umsetzer (42) eine konvexe Rückseite hat, die mit der Vorderseite (V) des Betätigungselements (40) zusammenwirkt.

6. Schiffsgetriebe (10) nach einem der vorstehenden Ansprüche, **dadurch gekennzeichnet, dass**
- das Betätigungselement (40) ein Gewindestift (48) ist und/oder
- der Umsetzer (42) eine Kugel ist.

7. Schiffsgetriebe (10) nach einem der vorstehenden Ansprüche, **gekennzeichnet durch**
(a) zumindest drei Betätigungselemente (40),
(b) zumindest drei Umsetzer (42), wobei jedes Betätigungselement (40) mit genau einem Umsetzer (42) zusammenwirkt.

8. Schiffsgetriebe (10) nach einem der vorstehenden Ansprüche, **dadurch gekennzeichnet, dass**
(a) das Lamellenpaket (30) in
- einen Einkuppelzustand, in dem die Antriebs-Lamellen (32) ein Drehmoment auf die Abtriebs-Lamellen (34) übertragen, und
- einen Auskuppelzustand, in dem die Antriebs-Lamellen (32) von den Abtriebs-Lamellen (34) um einen Kuppelweg beabstandet sind, bringbar ist, und dass
(b) ein Radius einer gedachten Ausgleichskugelkappe durch die Vorderseite (V) des Betätigungselements (40) größer ist als der Kuppelweg.

9. Schiffsgetriebe (10) nach Anspruch 8, **dadurch gekennzeichnet, dass** der Radius höchstens das Zehnfache des Kuppelwegs beträgt.

10. Schiffsgetriebe (10) nach einem der vorstehenden Ansprüche, **dadurch gekennzeichnet, dass** die Querrichtung (Q) einen Umsetzwinkel (a) mit der Kuppelrichtung (K) bildet, der um höchstens 10° vom rechten Winkel abweicht.

11. Schiffsgetriebe (10) nach einem der vorstehenden Ansprüche, **gekennzeichnet durch** ein Gehäuse (16), das
- die Lamellen umgibt und
- eine reversibel verschließbare Revisionsöffnung (56) hat,
- wobei die Betätigungselemente (40) so angeordnet sind, dass eine Längsachse (L_{40.j}) zumindest eines Betätigungselements (40) durch die Öffnung verläuft.

12. Schiff (52) mit einem Schiffsgetriebe (10) nach einem der vorstehenden Ansprüche.
PI/mi
